# EUROPEAN PATENT APPLICATION

(11) **EP 4 776 429 A1**
(43) Date of publication of application: **15.07.2026**
(21) Application number: 25220042.3
(22) Date of filing: 02.12.2025
(51) Int. Cl.: H01R 4/30

(54) **CONNECTION STRUCTURE**

(30) Priority: 08.01.2025 JP 2025002785
(71) Applicant: Japan Aviation Electronics Industry, Limited, Tokyo 150-0043 (JP)
(72) Inventor: NAKAMURA, Keisuke, Tokyo, 150-0043 (JP)
(74) Representative: Prüfer & Partner mbB Patentanwälte · Rechtsanwälte

(57) **Abstract**

A connection structure comprises a first contact, a second contact, a relay contact, a first receiving portion and a second receiving portion. The first contact is formed with a first female thread. The second contact is formed with a second female thread. The relay contact has a shaft portion extending in a predetermined direction. The shaft portion is formed with a first male thread and a second male thread. A regulation of a movement of the first contact by the first receiving portion and a regulation of a movement of the second contact by the second receiving portion cause that the first male thread of the relay contact is brought into contact with the first female thread of the first contact at multiple locations while the second male thread of the relay contact is brought into contact with the second female thread of the second contact at multiple locations.

## Description

### BACKGROUND OF THE INVENTION

This invention relates to a connection structure which electrically connects between a first connection object and a second connection object.

JPA 2019-204635 (Patent Document 1) discloses a connection member 900, or a connection structure 900, which connects neighboring battery modules 910, 920 with each other. As shown in Figs. 37 and 38, the connection structure of Patent Document 1 comprises a busbar 901, a busbar 902, a pair of plastic covers 905, 906, an insulating bolt 907 and a nut 908. An end portion 9012 of the busbar 901 is connected to a representative electrode 912 of the battery module 910. The other end portion 9014 of the busbar 901 has a flat-plate shape and is formed with a piercing hole 9015. An end portion 9022 of the busbar 902 is connected to a representative electrode 922 of the battery module 920. The other end portion 9024 of the busbar 902 has a flat-plate shape and is formed with a piercing hole 9025. The insulating bolt 907 passes through both the piercing hole 9015 of the busbar 901 and the piercing hole 9025 of the busbar 902. The nut 908 is embedded in the plastic cover 906. The end portion 9014, which has the flat-plate shape, of the busbar 901 and the end portion 9024, which has the flat-plate shape, of the busbar 902 are fastened to each other by the insulating bolt 907 and the nut 908 in a state where the end portion 9014 and the end portion 9024 are brought into surface contact with each other.

In a connection structure whose flat-shaped contact portions of busbars are brought into surface contact with each other similar to the connection structure 900 of Patent Document 1, it is difficult to bring the contact portions into contact with each other at multiple locations and thereby the contact portions have increased electric resistance values. Accordingly, such a connection structure has a drawback that temperature rises at its contact portions, which are caused by Joule heating, are significant when electricity is applied to the connection structure.

### SUMMARY OF THE INVENTION

It is therefore an object of the present invention to provide a connection structure which can prevent temperature rises at its contact portions when electricity is applied to the connection structure.

One aspect of the present invention provides a connection structure configured to electrically connect between a first connection object and a second connection object. The connection structure comprises a first contact, a second contact, a relay contact, a first receiving portion and a second receiving portion. The first contact is configured to be connected to the first connection object. The second contact is configured to be connected to the second connection object. The first contact is formed with a first female thread. The second contact is formed with a second female thread whose handedness is opposite to a handedness of the first female thread. The relay contact has a shaft portion extending in a predetermined direction. The shaft portion is formed with a first male thread and a second male thread. The first male thread corresponds to the first female thread. The second male thread corresponds to the second female thread. A handedness of the second male thread is opposite to a handedness of the first male thread. When the first contact receives a force in a first orientation along the predetermined direction by a mating of the first male thread of the relay contact and the first female thread of the first contact upon screwing of the relay contact, the first receiving portion receives the first contact to regulate a movement of the first contact in the first orientation. When the second contact receives a force in a second orientation along the predetermined direction by a mating of the second male thread of the relay contact and the second female thread of the second contact upon the screwing of the relay contact, the second receiving portion receives the second contact to regulate a movement of the second contact in the second orientation. The second orientation is opposite to the first orientation. The regulation of the movement of the first contact by the first receiving portion and the regulation of the movement of the second contact by the second receiving portion cause that the first male thread of the relay contact is brought into contact with the first female thread of the first contact at multiple locations while the second male thread of the relay contact is brought into contact with the second female thread of the second contact at multiple locations.

In the connection structure of the present invention, the regulation of the movement of the first contact by the first receiving portion and the regulation of the movement of the second contact by the second receiving portion cause that the first male thread of the relay contact is brought into contact with the first female thread of the first contact at the multiple locations while the second male thread of the relay contact is brought into contact with the second female thread of the second contact at the multiple locations. Accordingly, the connection structure of the present invention is configured so that a contact portion, at which the first contact and the relay contact are brought into contact with each other, has a reduced electric resistance value while a contact portion, at which the second contact and the relay contact are brought into contact with each other, has a reduced electric resistance value. Thus, the connection structure of the present invention can prevent temperature rises at its contact portions when electricity is applied to the connection structure.

An appreciation of the objectives of the present invention and a more complete understanding of its structure may be had by studying the following description of the preferred embodiment and by referring to the accompanying drawings.

### BRIEF DESCRIPTION OF THE DRAWINGS

Fig. 1 is an upper, perspective view showing a connection structure according to a first embodiment of the present invention. In the figure, a first contact is connected to a first connection object while a second contact is connected to a second connection object. Additionally, in the figure, a first male thread of a relay contact and a first female thread of the first contact are mated with each other while a second male thread of the relay contact and a second female thread of the second contact are unmated with each other.
Fig. 2 is a lower, perspective view showing the connection structure of Fig. 1.
Fig. 3 is a top view showing the connection structure of Fig. 1.
Fig. 4 is a bottom view showing the connection structure of Fig. 1.
Fig. 5 is a front view showing the connection structure of Fig. 1.
Fig. 6 is a cross-sectional view showing the connection structure of Fig. 5, taken along line A-A.
Fig. 7 is a side view showing the connection structure of Fig. 1.
Fig. 8 is a cross-sectional view showing the connection structure of Fig. 7, taken along line B-B.
Fig. 9 is another front view showing the connection structure of Fig. 5. In the figure, the first male thread of the relay contact and the first female thread of the first contact are mated with each other while the second male thread of the relay contact and the second female thread of the second contact are in the middle of being mated with each other.
Fig. 10 is a cross-sectional view showing the connection structure of Fig. 9, taken along line C-C.
Fig. 11 is a side view showing the connection structure of Fig. 9.
Fig. 12 is a cross-sectional view showing the connection structure of Fig. 11, taken along line D-D.
Fig. 13 is another upper, perspective view showing the connection structure of Fig. 1. In the figure, the first male thread of the relay contact and the first female thread of the first contact are mated with each other while the second male thread of the relay contact and the second female thread of the second contact are mated with each other.
Fig. 14 is a lower, perspective view showing the connection structure of Fig. 13.
Fig. 15 is a front view showing the connection structure of Fig. 13.
Fig. 16 is a cross-sectional view showing the connection structure of Fig. 15, taken along line E-E.
Fig. 17 is a side view showing the connection structure of Fig. 13.
Fig. 18 is a cross-sectional view showing the connection structure of Fig. 17, taken along line F-F. In the figure, a part of the connection structure is enlarged and illustrated.
Fig. 19 is an upper, perspective view showing the first contact which is included in the connection structure of Fig. 1. In the figure, the first contact is connected to the first connection object.
Fig. 20 is a lower, perspective view showing the first contact of Fig. 19.
Fig. 21 is an upper, perspective view showing the relay contact which is included in the connection structure of Fig. 1.
Fig. 22 is a lower, perspective view showing the relay contact of Fig. 21.
Fig. 23 is an upper, perspective view showing a connection structure according to a second embodiment of the present invention. In the figure, a first contact is connected to a first connection object while a second contact is connected to a second connection object. Additionally, in the figure, a first male thread of a relay contact and a first female thread of the first contact are mated with each other while a second male thread of the relay contact and a second female thread of the second contact are unmated with each other.
Fig. 24 is a lower, perspective view showing the connection structure of Fig. 23.
Fig. 25 is a top view showing the connection structure of Fig. 23.
Fig. 26 is a bottom view showing the connection structure of Fig. 23.
Fig. 27 is a front view showing the connection structure of Fig. 23.
Fig. 28 is a cross-sectional view showing the connection structure of Fig. 27, taken along line G-G.
Fig. 29 is a side view showing the connection structure of Fig. 23.
Fig. 30 is a cross-sectional view showing the connection structure of Fig. 29, taken along line H-H.
Fig. 31 is another upper, perspective view showing the connection structure of Fig. 23. In the figure, the first male thread of the relay contact and the first female thread of the first contact are mated with each other while the second male thread of the relay contact and the second female thread of the second contact are mated with each other.
Fig. 32 is a lower, perspective view showing the connection structure of Fig. 31.
Fig. 33 is a front view showing the connection structure of Fig. 31.
Fig. 34 is a cross-sectional view showing the connection structure of Fig. 33, taken along line I-I.
Fig. 35 is a side view showing the connection structure of Fig. 31.
Fig. 36 is a cross-sectional view showing the connection structure of Fig. 35, taken along line J-J. In the figure, a part of the connection structure is enlarged and illustrated.

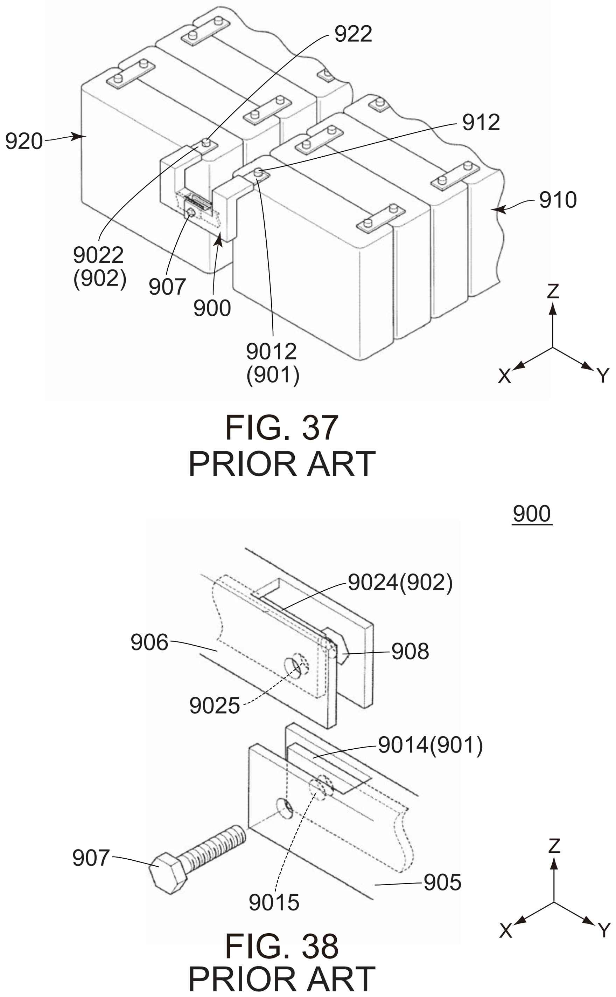

Fig. 37 is a perspective view showing a connection member described in Patent Document 1.
Fig. 38 is a perspective view showing essential parts of the connection member of Fig. 37, wherein the connection member is in a state before the essential parts are assembled to one another.

While the invention is susceptible to various modifications and alternative forms, specific embodiments thereof are shown by way of example in the drawings and will herein be described in detail. It should be understood, however, that the drawings and detailed description thereto are not intended to limit the invention to the particular form disclosed, but on the contrary, the intention is to cover all modifications, equivalents and alternatives falling within the spirit and scope of the present invention as defined by the appended claims.

### DETAILED DESCRIPTION

### [First embodiment]

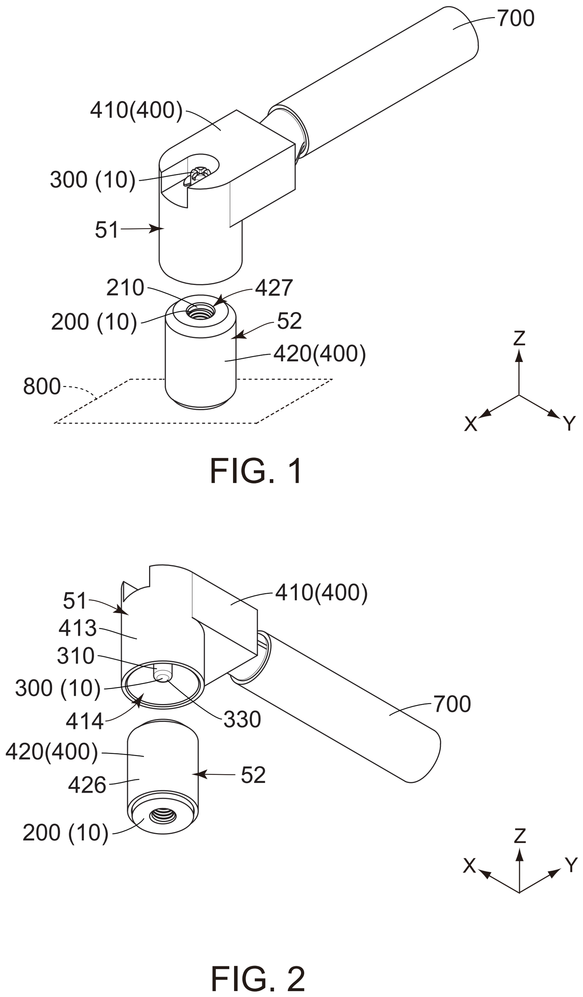

Referring to Fig. 1, a connection structure 10 according to a first embodiment of the present invention is configured to electrically connect between a first connection object 700 and a second connection object 800. Specifically, the connection structure 10 of the present embodiment is configured to electrically connect between a high current carrying power cable 700, or the first connection object 700, and a busbar 800, or the second connection object 800. However, the present invention is not limited thereto. Specifically, the first connection object 700 may be an object other than the electrical cable, while the second connection object 800 may be an object other than the busbar.

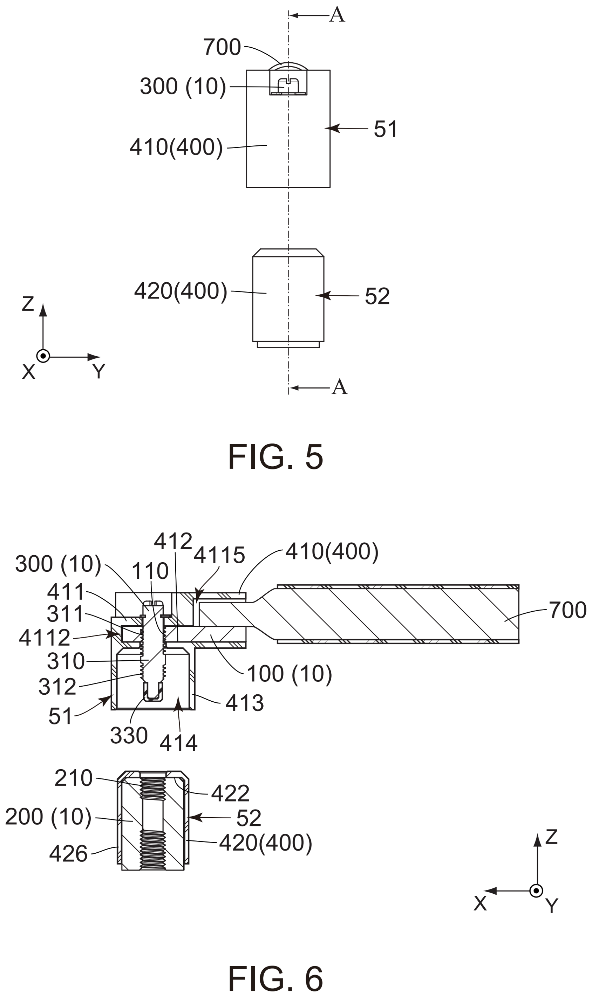

As shown in Fig. 6, the connection structure 10 comprises a first contact 100, a second contact 200, a relay contact 300, a first receiving portion 412 and a second receiving portion 422. The connection structure 10 further comprises an insulator 400. However, the present invention is not limited thereto. Specifically, the connection structure 10 may comprise no insulator 400.

Referring to Fig. 6, the insulator 400 of the present embodiment is made of insulating material. The insulator 400 includes a first insulator 410 and a second insulator 420. The first insulator 410 and the second insulator 420 are distinct and separated from each other.

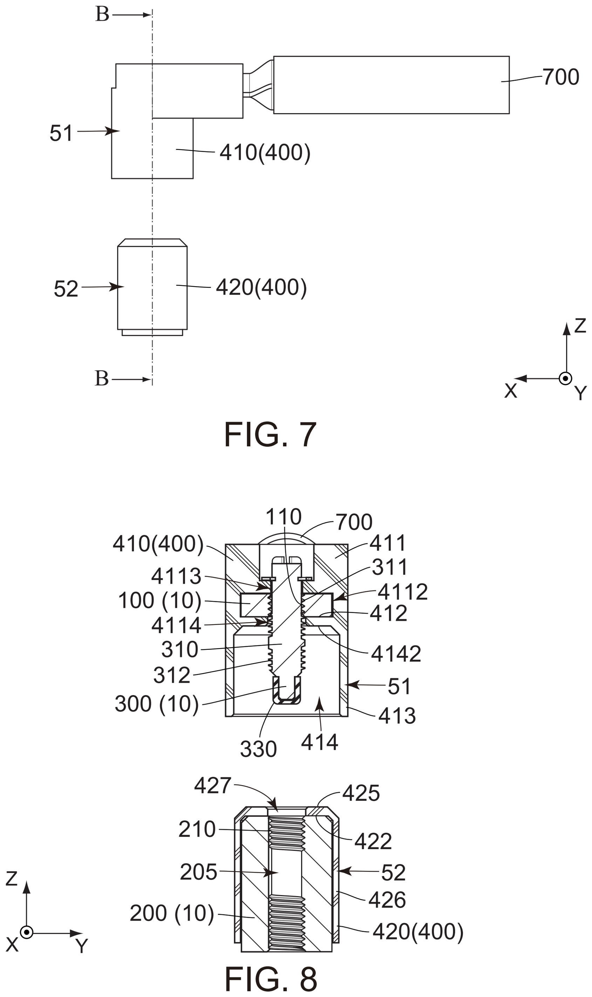

As shown in Fig. 6, the first insulator 410 of the present embodiment holds the first contact 100. The first receiving portion 412 is provided on the first insulator 410. The first insulator 410, the first contact 100 and the relay contact 300 form a first connection element 51. As shown in Fig. 8, the first insulator 410 has a body portion 411, a first surrounding portion 413 and a second connection element accommodating portion 414.

As shown in Fig. 6, the body portion 411 of the present embodiment defines an upper end of the first insulator 410 in an up-down direction. In the present embodiment, the up-down direction is a Z-direction. Specifically, upward is a positive Z-direction while downward is a negative Z-direction. In addition, the up-down direction is also referred to as a predetermined direction. The body portion 411 holds the first contact 100. The first receiving portion 412 is provided on the body portion 411. As shown in Figs. 6 and 8, the body portion 411 has a first contact accommodating portion 4112, a first hole 4113, a second hole 4114 and a first connection object receiving portion 4115.

As shown in Fig. 6, the first contact accommodating portion 4112 of the present embodiment extends in a front-rear direction. The first contact accommodating portion 4112 opens at its rear end in the front-rear direction. In the present embodiment, the front-rear direction is an X-direction. Specifically, forward is a positive X-direction while rearward is a negative X-direction. The first contact accommodating portion 4112 and the first connection object receiving portion 4115 communicate with each other in the predetermined direction. The first contact accommodating portion 4112 accommodates the first contact 100. The first receiving portion 412 is provided on the first contact accommodating portion 4112. More in detail, the first receiving portion 412 is a part of a lower surface of the first contact accommodating portion 4112.

As shown in Fig. 8, the first hole 4113 of the present embodiment is positioned above the first contact accommodating portion 4112 in the up-down direction. The first hole 4113 communicates with the first contact accommodating portion 4112. Specifically, the first contact accommodating portion 4112 communicates with the outside of the first connection element 51 through the first hole 4113.

As shown in Fig. 8, the second hole 4114 of the present embodiment is positioned below the first contact accommodating portion 4112 in the up-down direction. The second hole 4114 communicates with the first contact accommodating portion 4112.

As shown in Fig. 6, the first connection object receiving portion 4115 of the present embodiment opens at its rear end in the front-rear direction. The first connection object receiving portion 4115 receives a distal end of the first connection object 700 when the connection structure 10 is connected to the first connection object 700.

As shown in Fig. 2, the first surrounding portion 413 of the present embodiment has a cylindrical tube shape extending in the predetermined direction. As shown in Fig. 8, the first surrounding portion 413 extends downward in the up-down direction from the body portion 411. The first surrounding portion 413 defines a lower end of the first insulator 410 in the up-down direction.

As shown in Fig. 8, the second connection element accommodating portion 414 of the present embodiment is a recess which is recessed upward in the up-down direction. A part of the relay contact 300 is positioned in the second connection element accommodating portion 414. A lower end of the relay contact 300 is positioned above a lower end of the second connection element accommodating portion 414. The first contact accommodating portion 4112 communicates with the second connection element accommodating portion 414 through the second hole 4114. The first contact 100 is not exposed in the second connection element accommodating portion 414. The second connection element accommodating portion 414 has an abutment target portion 4142.

As shown in Fig. 8, the abutment target portion 4142 of the present embodiment is a plane intersecting with the predetermined direction. Specifically, the abutment target portion 4142 is perpendicular to the predetermined direction. The abutment target portion 4142 defines an upper end of the second connection element accommodating portion 414. The abutment target portion 4142 is positioned below the first receiving portion 412 in the up-down direction. The abutment target portion 4142 is positioned below the first contact 100 in the up-down direction.

As shown in Fig. 8, the second insulator 420 of the present embodiment holds the second contact 200. In a direction perpendicular to the predetermined direction, the second insulator 420 surrounds the second contact 200. The second receiving portion 422 is provided on the second insulator 420. The second insulator 420 and the second contact 200 form a second connection element 52. The first connection element 51 and the second connection element 52 are distinct and separated from each other.

As shown in Fig. 8, the second insulator 420 has an abutment portion 425 and a second surrounding portion 426.

As shown in Fig. 8, the abutment portion 425 of the present embodiment is a plane intersecting with the predetermined direction. Specifically, the abutment portion 425 is perpendicular to the predetermined direction. The abutment portion 425 is positioned above the second receiving portion 422 in the up-down direction. The abutment portion 425 is positioned above the second surrounding portion 426 in the up-down direction. The abutment portion 425 is positioned above the second contact 200 in the up-down direction. The abutment portion 425 defines an upper end of the second insulator 420 in the up-down direction. The abutment portion 425 defines an upper end of the second connection element 52 in the up-down direction.

As shown in Fig. 2, the second surrounding portion 426 of the present embodiment has a cylindrical tube shape extending in the predetermined direction. As shown in Fig. 8, the second surrounding portion 426 surrounds the second contact 200 in the direction perpendicular to the predetermined direction. The second surrounding portion 426 is positioned below the second receiving portion 422 in the up-down direction. The second surrounding portion 426 is positioned below the abutment portion 425 in the up-down direction. The second surrounding portion 426 defines a lower end of the second insulator 420 in the up-down direction.

As shown in Fig. 8, the second insulator 420 has an aperture 427.

As shown in Fig. 8, the aperture 427 of the present embodiment is positioned at the upper end of the second insulator 420 in the up-down direction. As shown in Fig. 1, a part of the second contact 200 is visible through the aperture 427 when the second connection element 52 is viewed from above.

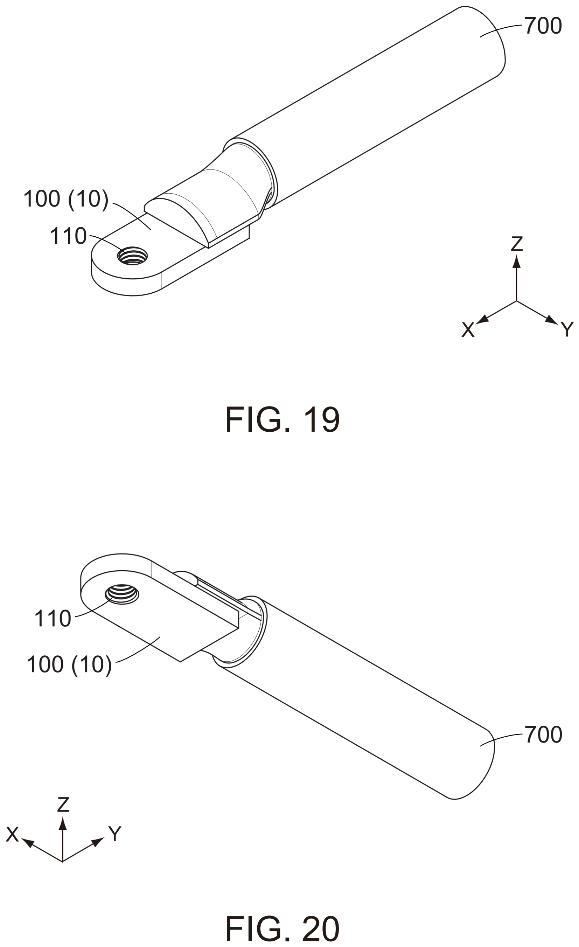

As shown in Fig. 19, the first contact 100 of the present embodiment is configured to be connected to the first connection object 700. The first contact 100 is made of metal. The first contact 100 has a flat-plate shape perpendicular to the predetermined direction. Referring to Figs. 5 and 8, the first contact 100 is invisible when the first connection element 51 is viewed from its front in the front-rear direction. Referring to Fig. 6, the first contact 100 is visible when the first connection element 51 is viewed from its rear in the front-rear direction. Referring to Figs. 6 and 7, the first contact 100 is invisible when the first connection element 51 is viewed along a width direction perpendicular to both the predetermined direction and the front-rear direction. In the predetermined direction, the width direction is a Y-direction. As shown in Fig. 8, the first contact 100 is positioned above the first receiving portion 412 in the up-down direction. The first contact 100 faces the first receiving portion 412 in the predetermined direction. The first contact 100 is in contact with the first receiving portion 412 in the predetermined direction.

As shown in Fig. 19, the first contact 100 is formed with a first female thread 110. In the present embodiment, the first female thread 110 is a left hand thread.

As shown in Fig. 1, the second contact 200 of the present embodiment is configured to be connected to the second connection object 800. Referring to Fig. 8, the second contact 200 is made of metal. The second contact 200 has a cylindrical tube shape extending in the predetermined direction. The second contact 200 is positioned below the second receiving portion 422 in the up-down direction. The second contact 200 faces the second receiving portion 422 in the predetermined direction. The second contact 200 is in contact with the second receiving portion 422 in the predetermined direction.

Referring to Figs. 8 and 19, the second contact 200 is formed with a second female thread 210 whose handedness is opposite to a handedness of the first female thread 110. In the present embodiment, the second female thread 210 is a right hand thread. As shown in Fig. 1, a part of the second female thread 210 is visible through the aperture 427 when the second connection element 52 is viewed from above. As shown in Fig. 8, all of the first hole 4113, the first female thread 110, the second hole 4114, the aperture 427 and the second female thread 210 are positioned at the same position in a plane perpendicular to the predetermined direction.

As shown in Fig. 8, the second contact 200 is formed with a piercing hole 205.

As shown in Fig. 8, the piercing hole 205 of the present embodiment pierces the second contact 200 in the predetermined direction. The second female thread 210 is provided at an upper end of the piercing hole 205. The aperture 427 of the second insulator 420 and the piercing hole 205 of the second contact 200 are positioned at the same position in the plane perpendicular to the predetermined direction. The aperture 427 of the second insulator 420 and the piercing hole 205 of the second contact 200 communicate with each other in the predetermined direction. In other words, the piercing hole 205 communicates with the outside of the second connection element 52 through the aperture 427.

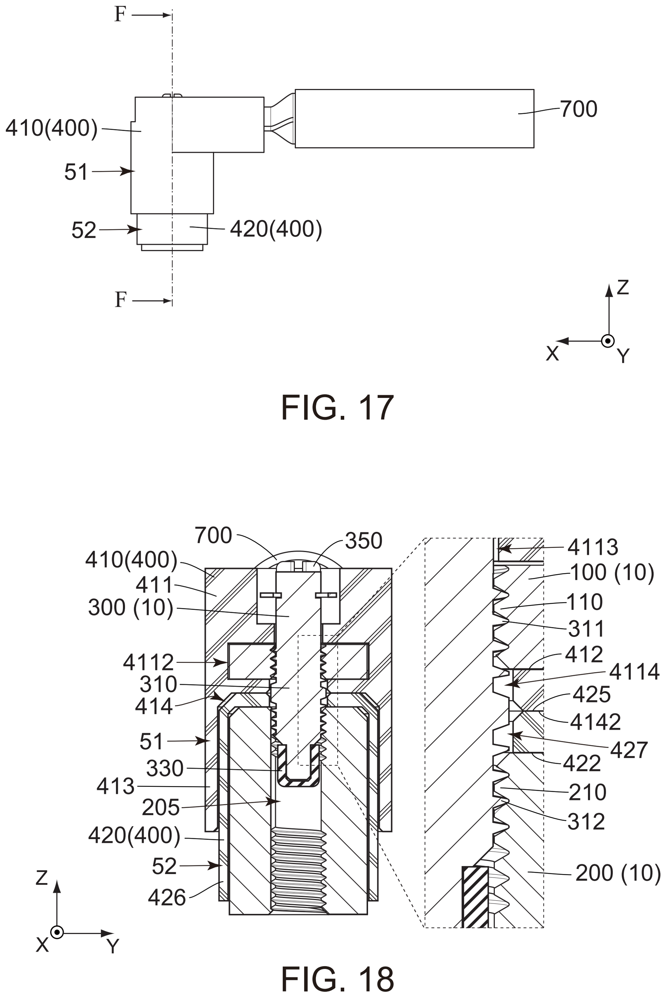

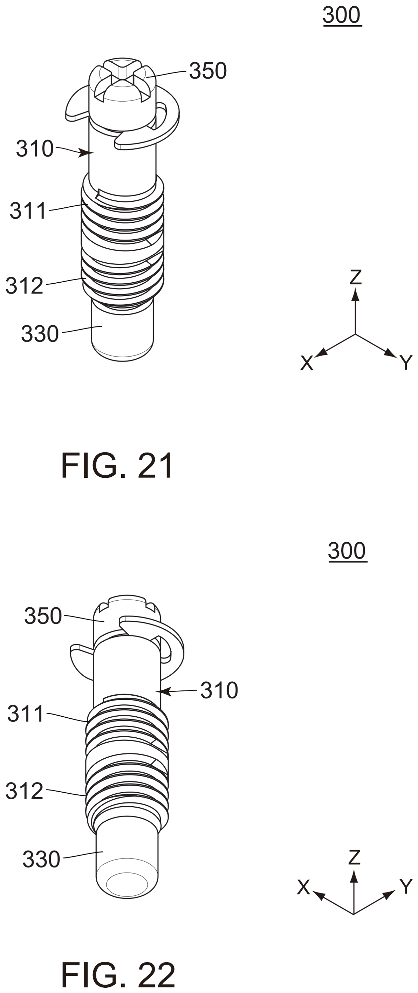

As shown in Fig. 22, the relay contact 300 of the present embodiment is a screw. The relay contact 300 has a shaft portion 310 extending in the predetermined direction. The shaft portion 310 is made of metal. The shaft portion 310 is formed with a first male thread 311 and a second male thread 312. A handedness of the second male thread 312 is opposite to a handedness of the first male thread 311. More specifically, the first male thread 311 is a left hand thread, while the second male thread 312 is a right hand thread. Referring to Figs. 19 and 22, the first male thread 311 corresponds to the first female thread 110. Referring to Figs. 8 and 22, the second male thread 312 corresponds to the second female thread 210. As shown in Fig. 8, a part of the shaft portion 310 is positioned in the second connection element accommodating portion 414. As shown in Fig. 18, the second connection element accommodating portion 414 accommodates a part of the second connection element 52 when the relay contact 300 is screwed. The first surrounding portion 413 surrounds a part of the second surrounding portion 426 in the direction perpendicular to the predetermined direction when the relay contact 300 is screwed.

As shown in Fig. 22, a distal end of the relay contact 300 is provided with a protection portion 330.

Referring to Fig. 22, the protection portion 330 of the present embodiment is made of insulating material. The protection portion 330 is positioned at a lower end of the shaft portion 310 in the up-down direction. As shown in Fig. 8, the protection portion 330 is positioned above the lower end of the second connection element accommodating portion 414. Referring to Fig. 2, the protection portion 330 can prevent electrical shock to an operator even if a finger of the operator is accidentally inserted in the second connection element accommodating portion 414 and is brought into contact with the distal end of the relay contact 300 when the operator handles the first connection element 51 energized by connecting the first connection object 700 to the first connection element 51. In other words, the protection portion 330 functions as a member for preventing electrical shock.

As shown in Fig. 22, the relay contact 300 has a head portion 350.

Referring to Fig. 22, the head portion 350 of the present embodiment defines an upper end of the relay contact 300 in the up-down direction. In the plane perpendicular to the predetermined direction, the head portion 350 has a cross-section whose area is equal to an area of a cross-section of the shaft portion 310. As shown in Fig. 18, the head portion 350 is positioned apart from the insulator 400 under a state where the abutment portion 425 abuts against the abutment target portion 4142. In other words, the head portion 350 is in non-contact with the insulator 400 under the state where the abutment portion 425 abuts against the abutment target portion 4142.

Referring to Fig. 18, the first receiving portion 412 of the present embodiment is a plane intersecting with the predetermined direction. Specifically, the first receiving portion 412 is perpendicular to the predetermined direction. The first receiving portion 412 is positioned between the first contact 100 and the second contact 200 in the predetermined direction. The first receiving portion 412 is positioned below the first contact 100 in the up-down direction. The first receiving portion 412 faces the first contact 100 in the predetermined direction. The first receiving portion 412 is in contact with the first contact 100 in the predetermined direction. When the first contact 100 receives a force in a first orientation along the predetermined direction by a mating of the first male thread 311 of the relay contact 300 and the first female thread 110 of the first contact 100 upon the screwing of the relay contact 300, the first receiving portion 412 receives the first contact 100 to regulate a movement of the first contact 100 in the first orientation. It is noted that the first orientation is an orientation from the first contact 100 toward the second contact 200. In the present embodiment, the first orientation is the negative Z-direction. In other words, the first orientation is downward.

Referring to Fig. 18, the second receiving portion 422 of the present embodiment is a plane intersecting with the predetermined direction. Specifically, the second receiving portion 422 is perpendicular to the predetermined direction. The second receiving portion 422 is positioned between the first contact 100 and the second contact 200 in the predetermined direction. The second receiving portion 422 is positioned above the second contact 200 in the up-down direction. The second receiving portion 422 faces the second contact 200 in the predetermined direction. The second receiving portion 422 is in contact with the second contact 200 in the predetermined direction. When the second contact 200 receives a force in a second orientation, which is opposite to the first orientation, along the predetermined direction by a mating of the second male thread 312 of the relay contact 300 and the second female thread 210 of the second contact 200 upon the screwing of the relay contact 300, the second receiving portion 422 receives the second contact 200 to regulate a movement of the second contact 200 in the second orientation. It is noted that the second orientation is an orientation from the second contact 200 toward the first contact 100. In the present embodiment, the second orientation is the positive Z-direction. In other words, the second orientation is upward.

Referring to Fig. 18, the regulation of the movement of the first contact 100 by the first receiving portion 412 and the regulation of the movement of the second contact 200 by the second receiving portion 422 cause that the first male thread 311 of the relay contact 300 is brought into contact with the first female thread 110 of the first contact 100 at multiple locations while the second male thread 312 of the relay contact 300 is brought into contact with the second female thread 210 of the second contact 200 at multiple locations. Accordingly, the connection structure 10 of the present embodiment is configured so that a contact portion, at which the first contact 100 and the relay contact 300 are brought into contact with each other, has a reduced electric resistance value while a contact portion, at which the second contact 200 and the relay contact 300 are brought into contact with each other, has a reduced electric resistance value. Thus, the connection structure 10 of the present embodiment can prevent temperature rises at its contact portions when electricity is applied to the connection structure 10.

Hereinafter, an explanation will be made about an example of how to assemble the connection structure 10.

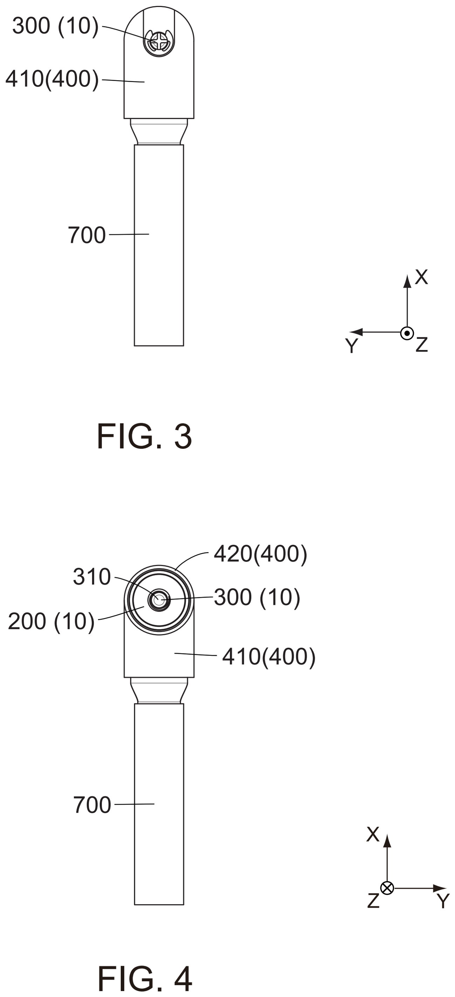

First, the first connection element 51, to which the first connection object 700 is connected, is arranged above the second connection element 52, which is connected to the second connection object 800, so that the first connection element 51 and the second connection element 52 take a state shown in each of Figs. 1 to 8. Meanwhile, the first female thread 110 of the first contact 100 and the first male thread 311 of the relay contact 300 are mated with each other, and the second female thread 210 of the second contact 200 is positioned just below the shaft portion 310 of the relay contact 300.

Next, the first connection element 51 is moved downward relative to the second connection element 52. Then, a distal end portion of the shaft portion 310 of the relay contact 300 of the first connection element 51 is inserted into the piercing hole 205 through the aperture 427 of the second connection element 52, and a lower end of the second male thread 312 of the relay contact 300 of the first connection element 51 is brought into contact with an upper end of the second female thread 210 of the second contact 200 of the second connection element 52.

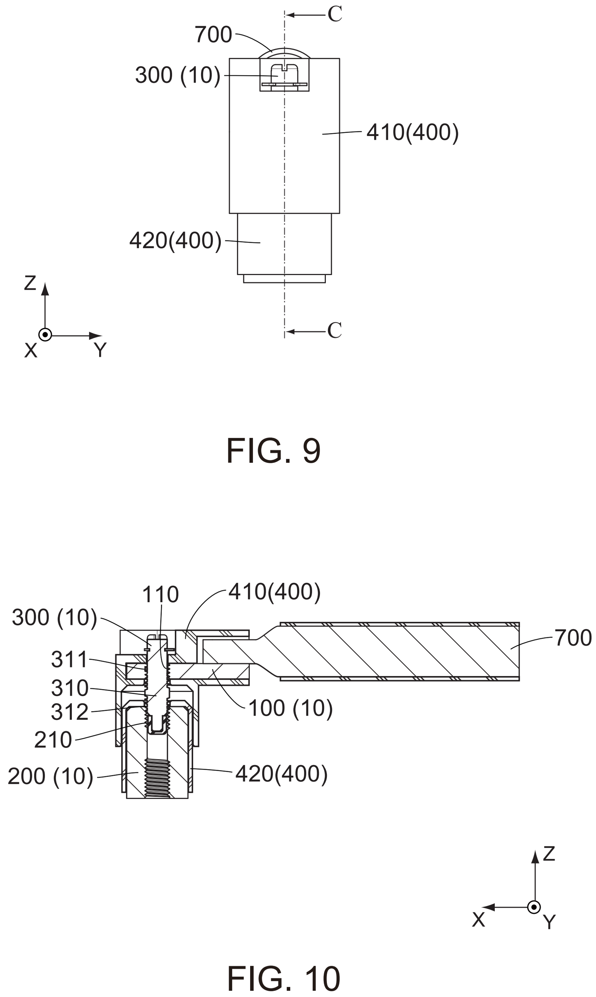

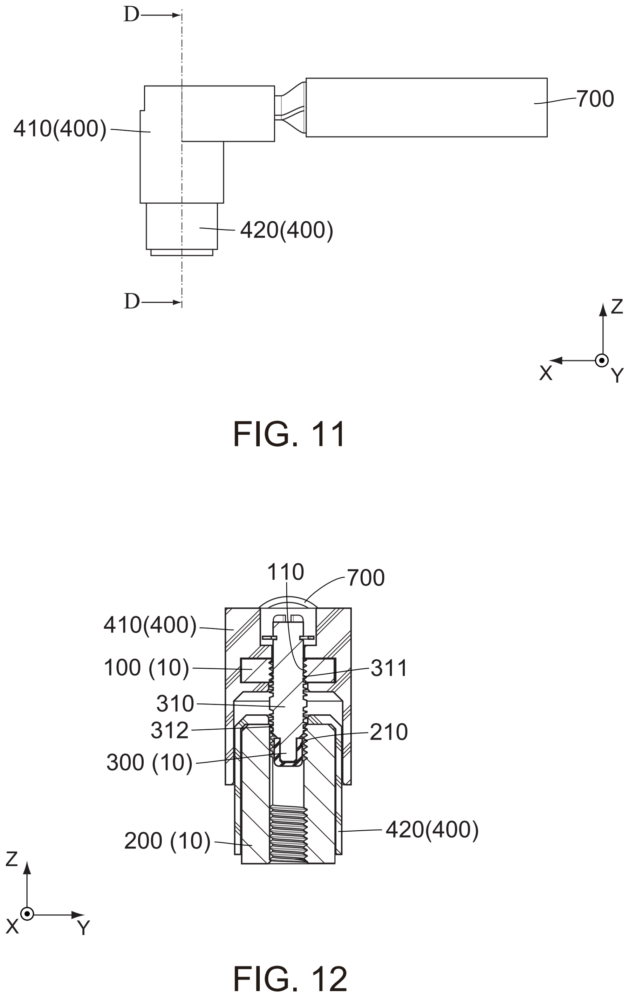

From this state, the relay contact 300 is turned clockwise when the first connection element 51 is viewed from above. Then, the second male thread 312 of the relay contact 300 is screwed into the second female thread 210 of the second contact 200 while the relay contact 300 is moved upward relative to the first contact 100. Meanwhile, the first connection element 51 and the second connection element 52 change their state into a state shown in each of Figs. 9 to 12.

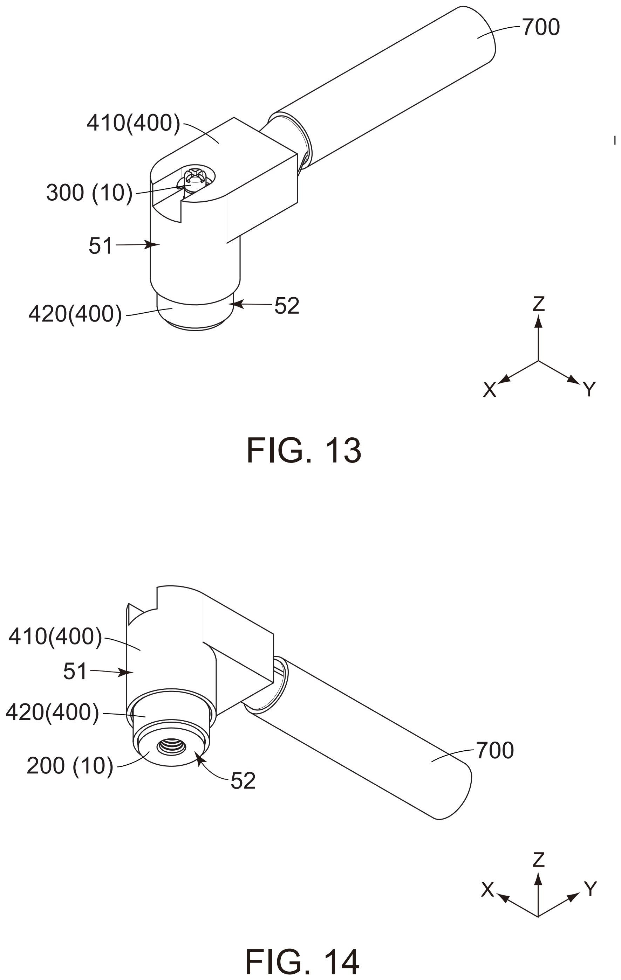

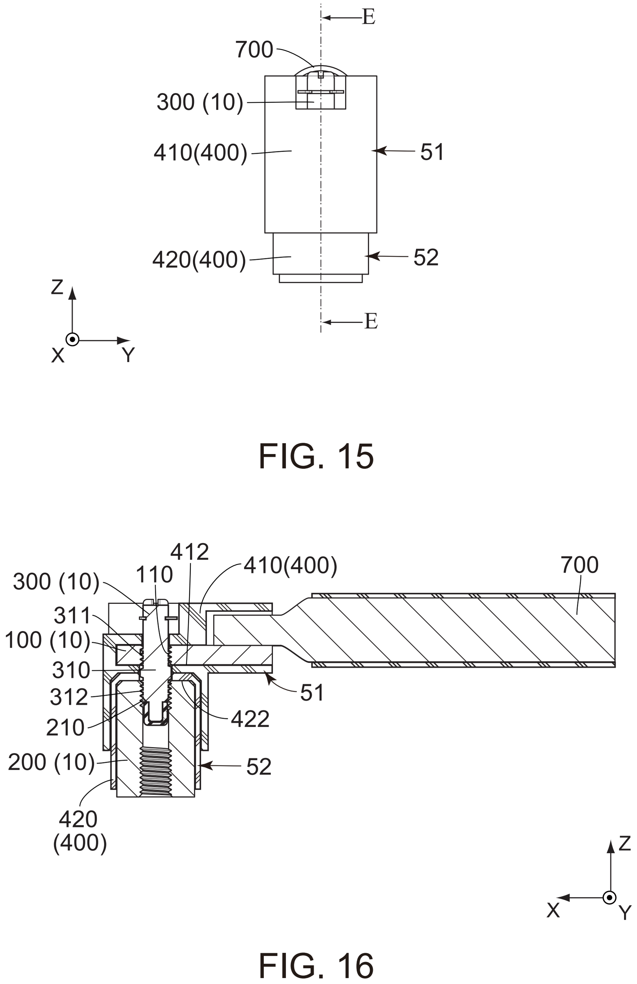

From this state, the relay contact 300 is further turned clockwise when the first connection element 51 is viewed from above. Then, the second male thread 312 of the relay contact 300 is completely mated with the second female thread 210 of the second contact 200, and the relay contact 300 is further moved upward relative to the first contact 100, and the abutment target portion 4142 of the first insulator 410 of the first connection element 51 and the abutment portion 425 of the second insulator 420 of the second connection element 52 are brought into contact with each other in the predetermined direction. Meanwhile, the first connection element 51 and the second connection element 52 change their state into a state shown in each of Figs. 13 to 18.

In this state, the first male thread 311 of the relay contact 300 is brought into contact with the first female thread 110 of the first contact 100 at the multiple locations. Specifically, in this state, a flank of the first male thread 311 of the relay contact 300 is brought into contact with a flank of the first female thread 110 of the first contact 100 at the multiple locations. In this state, the first contact 100 receives a downward force in the up-down direction while the first receiving portion 412 receives the first contact 100 to regulate a downward movement of the first contact 100. In other words, when the first contact 100 receives the force in the first orientation along the predetermined direction by the mating of the first male thread 311 of the relay contact 300 and the first female thread 110 of the first contact 100 upon the screwing of the relay contact 300, the first receiving portion 412 receives the first contact 100 to regulate the movement of the first contact 100 in the first orientation.

Additionally, in this state, the second male thread 312 of the relay contact 300 is brought into contact with the second female thread 210 of the second contact 200 at the multiple locations. Specifically, in this state, a flank of the second male thread 312 of the relay contact 300 is brought into contact with a flank of the second female thread 210 of the second contact 200 at the multiple locations. In this state, the second contact 200 receives an upward force in the up-down direction while the second receiving portion 422 receives the second contact 200 to regulate an upward movement of the second contact 200. In other words, when the second contact 200 receives the force in the second orientation, which is opposite to the first orientation, along the predetermined direction by the mating of the second male thread 312 of the relay contact 300 and the second female thread 210 of the second contact 200 upon the screwing of the relay contact 300, the second receiving portion 422 receives the second contact 200 to regulate the movement of the second contact 200 in the second orientation.

Although the connection structure 10 of the aforementioned embodiment comprises the insulator 400 which holds both the first contact 100 and the second contact 200, the present invention is not limited thereto. Specifically, the insulator 400 may be formed only of the first insulator 410 which holds the first contact 100, or may be formed only of the second insulator 420 which holds the second contact 200. In other words, the connection structure 10 may further comprise an insulator 400 which holds at least one of the first contact 100 and the second contact 200. In this case, the insulator 400 may be configured as follows: a part of the insulator 400 is positioned between the first contact 100 and the second contact 200 upon the screwing of the relay contact 300; and the part of the insulator 400 functions as at least one of the first receiving portion 412 and the second receiving portion 422 upon the screwing of the relay contact 300.

The connection structure 10 of the aforementioned embodiment is configured as follows: an upper part of the relay contact 300 is formed with the first male thread 311 which is the left hand thread; a lower part of the relay contact 300 is formed with the second male thread 312 which is the right hand thread; and both of the first receiving portion 412 and the second receiving portion 422 are positioned between the first contact 100 and the second contact 200 in the predetermined direction. However, the present invention is not limited thereto. Specifically, the connection structure 10 may be modified as follows: an upper part of a relay contact 300 is formed with a first male thread 311 which is a right hand thread; a lower part of the relay contact 300 is formed with a second male thread 312 which is a left hand thread; a first receiving portion 412 is arranged above the first contact 100; and a second receiving portion 422 is arranged below the second contact 200. In this case, upon screwing of the relay contact 300, the modified connection structure 10 takes a state as follows: the first contact 100 receives an upward force by a mating of the first male thread 311 of the relay contact 300 and the first female thread 110 of the first contact 100; the first receiving portion 412 receives the first contact 100 to regulate an upward movement of the first contact 100; the second contact 200 receives a downward force by a mating of the second male thread 312 of the relay contact 300 and the second female thread 210 of the second contact 200; and the second receiving portion 422 receives the second contact 200 to regulate a downward movement of the second contact 200. Specifically, in this case, a first orientation is upward while a second orientation is downward. That is, in this case, the first orientation is an orientation from the second contact 200 toward the first contact 100 while the second orientation is an orientation from the first contact 100 toward the second contact 200.

### [Second embodiment]

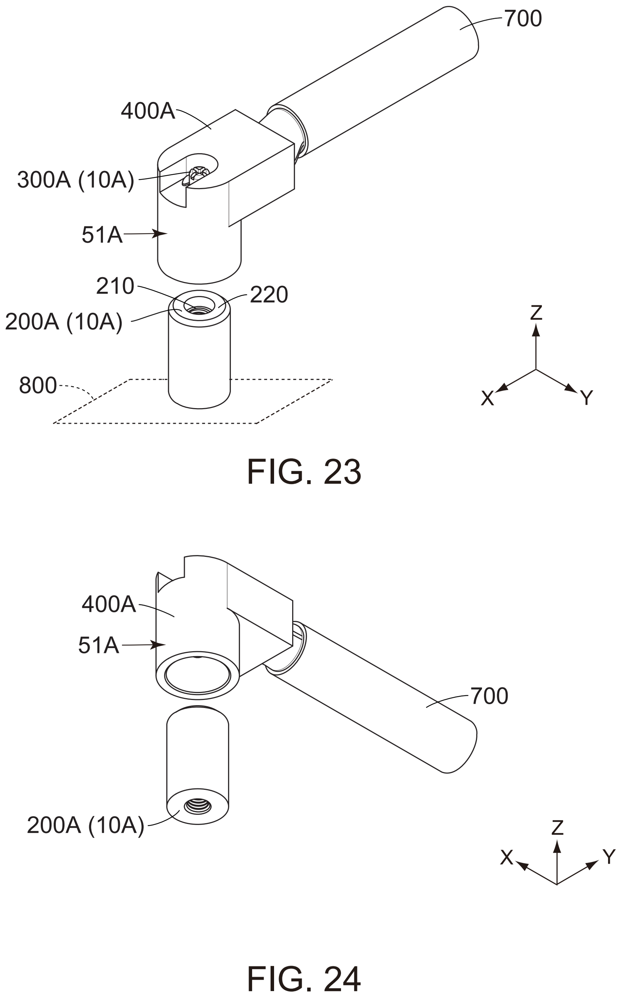

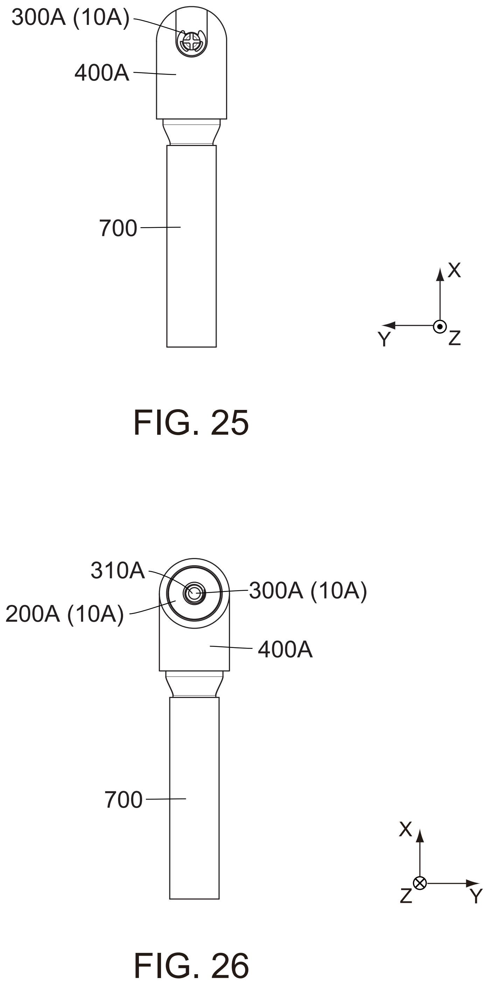

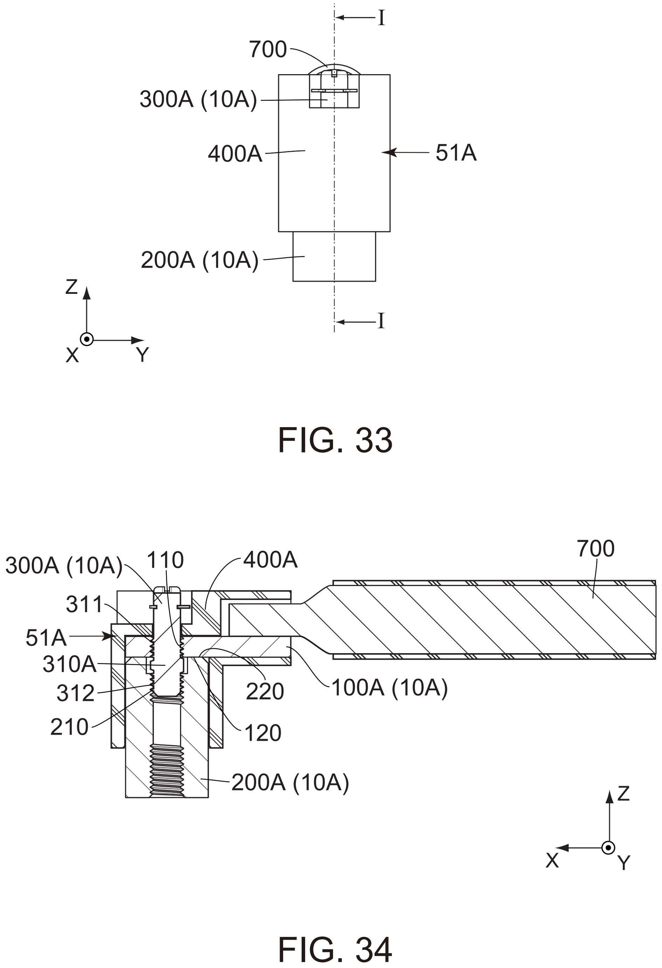

Referring to Fig. 23, a connection structure 10A according to a second embodiment of the present invention is configured to electrically connect between a first connection object 700 and a second connection object 800. The connection structure 10A of the present embodiment has a structure similar to that of the connection structure 10 of the aforementioned first embodiment as shown in Fig. 1. Components of the connection structure 10A shown in Figs. 23 to 36 which are same as those of the connection structure 10 of the first embodiment are referred by using reference signs same as those of the connection structure 10 of the first embodiment. As for directions and orientations in the present embodiment, expressions same as those of the first embodiment will be used hereinbelow.

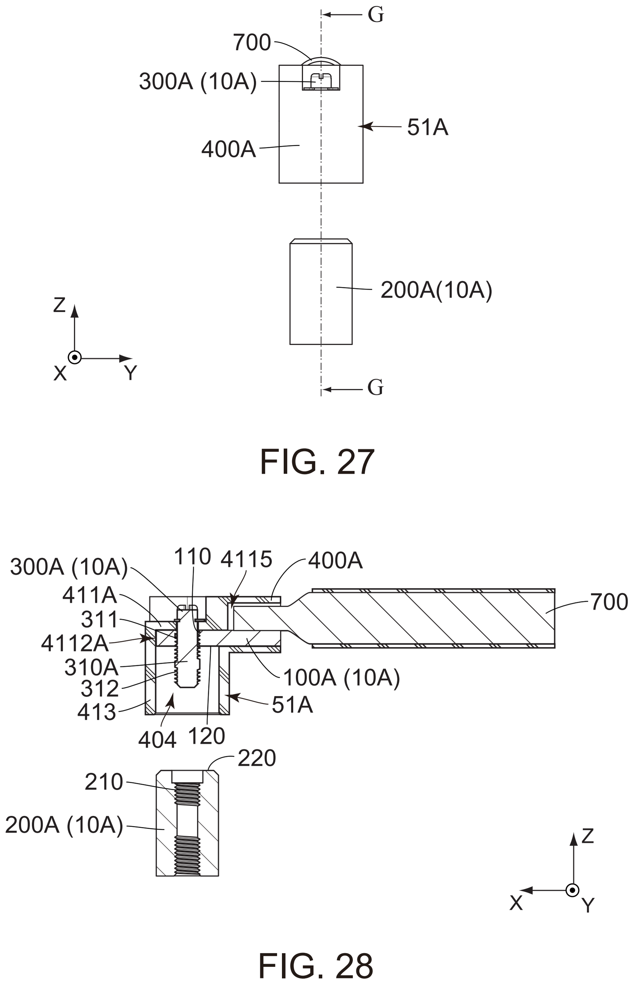

As shown in Fig. 28, the connection structure 10A comprises a first contact 100A, a second contact 200A, a relay contact 300A, a first receiving portion 220 and a second receiving portion 120. The connection structure 10A further comprises an insulator 400A. However, the present invention is not limited thereto. Specifically, the connection structure 10A may comprise no insulator 400A.

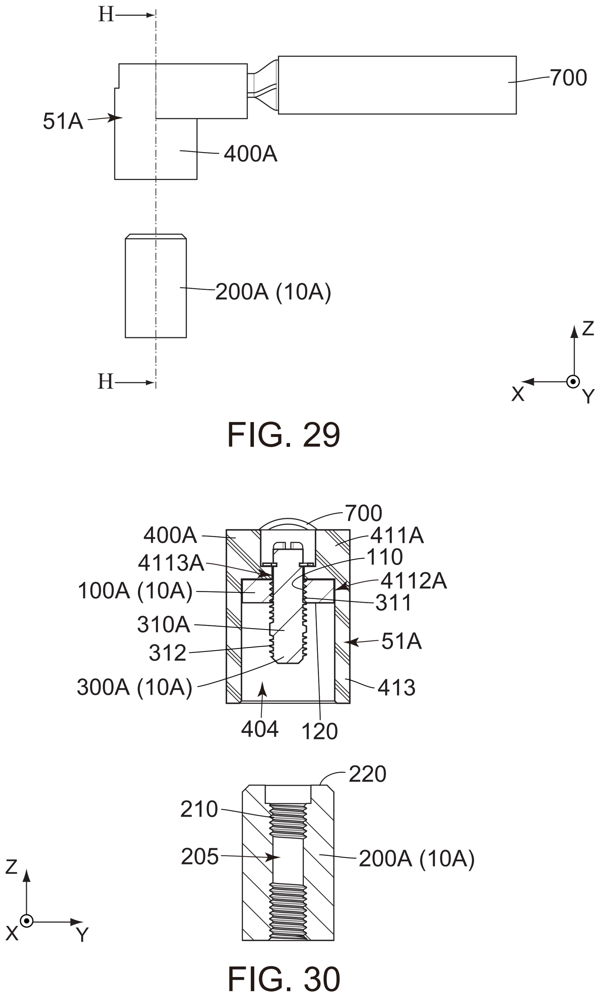

Referring to Fig. 28, the insulator 400A of the present embodiment is made of insulating material. The insulator 400A holds the first contact 100A. It is noted that the insulator 400A does not hold the second contact 200A dissimilar to the insulator 400 of the aforementioned embodiment. The insulator 400A, the first contact 100A and the relay contact 300A form a connection element 51A. As shown in Fig. 30, the insulator 400A has a body portion 411A, a first surrounding portion 413 and a second contact accommodating portion 404. The first surrounding portion 413 of the present embodiment has a structure similar to that of the first surrounding portion 413 of the aforementioned embodiment. Accordingly, a detailed explanation thereabout is omitted.

As shown in Fig. 28, the body portion 411A of the present embodiment defines an upper end of the insulator 400A in the up-down direction. The body portion 411A holds the first contact 100A. As shown in Figs. 28 and 30, the body portion 411A has a first contact accommodating portion 4112A, a hole 4113A and a first connection object receiving portion 4115. The first connection object receiving portion 4115 of the present embodiment has a structure same as that of the first connection object receiving portion 4115 of the aforementioned first embodiment. Accordingly, a detailed explanation thereabout is omitted.

As shown in Fig. 28, the first contact accommodating portion 4112A of the present embodiment extends in the front-rear direction. The first contact accommodating portion 4112A opens at its rear end in the front-rear direction. The first contact accommodating portion 4112A and the first connection object receiving portion 4115 communicate with each other in the predetermined direction. The first contact accommodating portion 4112A accommodates the first contact 100A.

As shown in Fig. 30, the hole 4113A of the present embodiment is positioned above the first contact accommodating portion 4112A in the up-down direction. The hole 4113A communicates with the first contact accommodating portion 4112A. Specifically, the first contact accommodating portion 4112A communicates with the outside of the connection element 51A through the hole 4113A.

As shown in Fig. 30, the second contact accommodating portion 404 of the present embodiment is a recess which is recessed upward in the up-down direction. A part of the relay contact 300A is positioned in the second contact accommodating portion 404. A lower end of the relay contact 300A is positioned above a lower end of the second contact accommodating portion 404. The second contact accommodating portion 404 communicates with the first contact accommodating portion 4112A in the predetermined direction. A part of the first contact 100A is exposed in the second contact accommodating portion 404. Specifically, a part of a lower surface of the first contact 100A is exposed in the second contact accommodating portion 404.

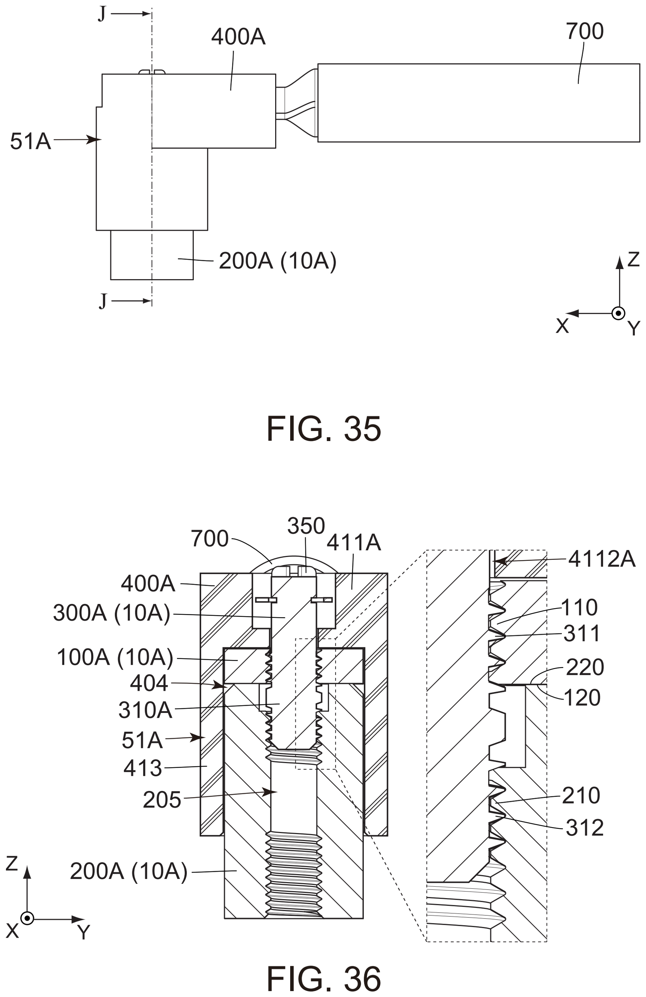

Referring to Fig. 28, the first contact 100A of the present embodiment is configured to be connected to the first connection object 700. The first contact 100A is made of metal. The first contact 100A has a flat-plate shape perpendicular to the predetermined direction. The second receiving portion 120 is provided on the first contact 100A. More in detail, a part of the lower surface of the first contact 100A functions as the second receiving portion 120. Referring to Figs. 27 and 30, the first contact 100A is invisible when the connection element 51A is viewed from its front in the front-rear direction. Referring to Fig. 28, the first contact 100A is visible when the connection element 51A is viewed from its rear in the front-rear direction. Referring to Figs. 28 and 29, the first contact 100A is invisible when the connection element 51A is viewed along the width direction. As shown in Fig. 36, the first contact 100A is positioned above the first receiving portion 220 in the up-down direction. The first contact 100A faces the first receiving portion 220 in the predetermined direction. The first contact 100A is in contact with the first receiving portion 220 in the predetermined direction.

As shown in Fig. 30, the first contact 100A is formed with a first female thread 110. In the present embodiment, the first female thread 110 is a left hand thread.

As shown in Fig. 23, the second contact 200A of the present embodiment is configured to be connected to the second connection object 800. The second contact 200A is made of metal. The second contact 200A has a cylindrical tube shape extending in the predetermined direction. The first receiving portion 220 is provided on the second contact 200A. More in detail, an upper surface of the second contact 200A functions as the first receiving portion 220. As shown in Fig. 36, the second contact 200A is positioned below the second receiving portion 120 in the up-down direction. The second contact 200A faces the second receiving portion 120 in the predetermined direction. The second contact 200A is in contact with the second receiving portion 120 in the predetermined direction.

Referring to Fig. 30, the second contact 200A is formed with a second female thread 210 whose handedness is opposite to a handedness of the first female thread 110. In the present embodiment, the second female thread 210 is a right hand thread. All of the hole 4113A, the first female thread 110 and the second female thread 210 are positioned at the same position in a plane perpendicular to the predetermined direction.

As shown in Fig. 30, the second contact 200A is formed with a piercing hole 205. The piercing hole 205 of the present embodiment has a structure similar to that of the piercing hole 205 of the second contact 200 of the aforementioned first embodiment. Accordingly, a detailed explanation thereabout is omitted.

As shown in Fig. 30, the relay contact 300A of the present embodiment is a screw made of metal. The relay contact 300A has a shaft portion 310A extending in the predetermined direction. A part of the shaft portion 310A is positioned in the second contact accommodating portion 404. As shown in Fig. 36, the second contact accommodating portion 404 accommodates a part of the second contact 200A when the relay contact 300A is screwed. The first surrounding portion 413 surrounds a part of the second contact 200A in the direction perpendicular to the predetermined direction when the relay contact 300A is screwed. As shown in Fig. 36, the relay contact 300A has a head portion 350. The head portion 350 of the present embodiment defines an upper end of the relay contact 300A in the up-down direction. In the plane perpendicular to the predetermined direction, the head portion 350 has a cross-section whose area is equal to an area of a cross-section of the shaft portion 310A. The head portion 350 is positioned apart from the insulator 400A under a state where the first receiving portion 220 abuts against the second receiving portion 120. In other words, the head portion 350 is in non-contact with the insulator 400A under the state where the first receiving portion 220 abuts against the second receiving portion 120. The relay contact 300A of the present embodiment has a structure similar to that of the relay contact 300 of the aforementioned embodiment except that the relay contact 300A is provided with no protection portion 330. Accordingly, a detailed explanation thereabout is omitted.

Referring to Fig. 30, the first receiving portion 220 of the present embodiment is a plane intersecting with the predetermined direction. Specifically, the first receiving portion 220 is perpendicular to the predetermined direction. As shown in Fig. 36, the first receiving portion 220 is positioned below the first contact 100A in the up-down direction. The first receiving portion 220 faces the first contact 100A in the predetermined direction. The first receiving portion 220 is in contact with the first contact 100A in the predetermined direction. When the first contact 100A receives a force in the first orientation along the predetermined direction by a mating of a first male thread 311 of the relay contact 300A and the first female thread 110 of the first contact 100A upon the screwing of the relay contact 300A, the first receiving portion 220 receives the first contact 100A to regulate a movement of the first contact 100A in the first orientation. It is noted that the first orientation is an orientation from the first contact 100A toward the second contact 200A.

Referring to Fig. 30, the second receiving portion 120 of the present embodiment is a plane intersecting with the predetermined direction. Specifically, the second receiving portion 120 is perpendicular to the predetermined direction. As shown in Fig. 36, the second receiving portion 120 is positioned above the second contact 200A in the up-down direction. The second receiving portion 120 faces the second contact 200A in the predetermined direction. The second receiving portion 120 is in contact with the second contact 200A in the predetermined direction. When the second contact 200A receives a force in the second orientation, which is opposite to the first orientation, along the predetermined direction by a mating of a second male thread 312 of the relay contact 300A and the second female thread 210 of the second contact 200A upon the screwing of the relay contact 300A, the second receiving portion 120 receives the second contact 200A to regulate a movement of the second contact 200A in the second orientation. It is noted that the second orientation is an orientation from the second contact 200A toward the first contact 100A.

Referring to Fig. 36, the regulation of the movement of the first contact 100A by the first receiving portion 220 and the regulation of the movement of the second contact 200A by the second receiving portion 120 cause that the first male thread 311 of the relay contact 300A is brought into contact with the first female thread 110 of the first contact 100A at multiple locations while the second male thread 312 of the relay contact 300A is brought into contact with the second female thread 210 of the second contact 200A at multiple locations. Accordingly, the connection structure 10A of the present embodiment is also configured so that a contact portion, at which the first contact 100A and the relay contact 300A are brought into contact with each other, has a reduced electric resistance value while a contact portion, at which the second contact 200A and the relay contact 300A are brought into contact with each other, has a reduced electric resistance value. Thus, the connection structure 10A of the present embodiment can also prevent temperature rises at its contact portions when electricity is applied to the connection structure 10A.

Hereinafter, an explanation will be made about an example of how to assemble the connection structure 10A.

First, the connection element 51A, to which the first connection object 700 is connected, is arranged above the second contact 200A, which is connected to the second connection object 800, so that the connection element 51A and the second contact 200A take a state shown in each of Figs. 23 to 30. Meanwhile, the first female thread 110 of the first contact 100A and the first male thread 311 of the relay contact 300A are mated with each other, and the second female thread 210 of the second contact 200A is positioned just below the shaft portion 310A of the relay contact 300A.

Next, the connection element 51A is moved downward relative to the second contact 200A. Then, a distal end portion of the shaft portion 310A of the relay contact 300A of the connection element 51A is inserted into the piercing hole 205 of the second contact 200A, and a lower end of the second male thread 312 of the relay contact 300A of the connection element 51A is brought into contact with an upper end of the second female thread 210 of the second contact 200A.

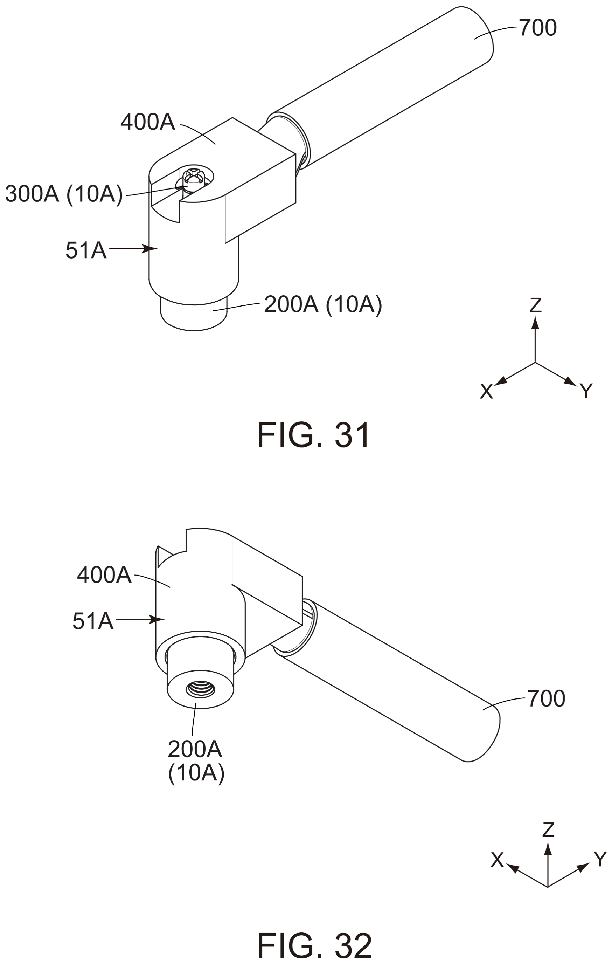

From this state, the relay contact 300A is turned clockwise when the connection element 51A is viewed from above. Then, the second male thread 312 of the relay contact 300A is mated with the second female thread 210 of the second contact 200A, and the relay contact 300A is moved upward relative to the first contact 100A, and the second receiving portion 120 of the connection element 51A and the first receiving portion 220 of the second contact 200A are brought into contact with each other in the predetermined direction. Meanwhile, the connection element 51A and the second contact 200A change their state into a state shown in each of Figs. 31 to 36.

In this state, the first male thread 311 of the relay contact 300A is brought into contact with the first female thread 110 of the first contact 100A at the multiple locations. Specifically, in this state, a flank of the first male thread 311 of the relay contact 300A is brought into contact with a flank of the first female thread 110 of the first contact 100A at the multiple locations. In this state, the first contact 100A receives a downward force in the up-down direction while the first receiving portion 220 receives the first contact 100A to regulate a downward movement of the first contact 100A. In other words, when the first contact 100A receives the force in the first orientation along the predetermined direction by the mating of the first male thread 311 of the relay contact 300A and the first female thread 110 of the first contact 100A upon the screwing of the relay contact 300A, the first receiving portion 220 receives the first contact 100A to regulate the movement of the first contact 100A in the first orientation.

Additionally, in this state, the second male thread 312 of the relay contact 300A is brought into contact with the second female thread 210 of the second contact 200A at the multiple locations. Specifically, in this state, a flank of the second male thread 312 of the relay contact 300A is brought into contact with a flank of the second female thread 210 of the second contact 200A at the multiple locations. In this state, the second contact 200A receives an upward force in the up-down direction while the second receiving portion 120 receives the second contact 200A to regulate an upward movement of the second contact 200A. In other words, when the second contact 200A receives the force in the second orientation, which is opposite to the first orientation, along the predetermined direction by the mating of the second male thread 312 of the relay contact 300A and the second female thread 210 of the second contact 200A upon the screwing of the relay contact 300A, the second receiving portion 120 receives the second contact 200A to regulate the movement of the second contact 200A in the second orientation.

Although the specific explanation about the present invention is made above referring to the embodiment, the present invention is not limited thereto and is susceptible to various modifications and alternative forms.

While there has been described what is believed to be the preferred embodiment of the invention, those skilled in the art will recognize that other and further modifications may be made thereto without departing from the spirit of the invention, and it is intended to claim all such embodiments that fall within the true scope of the invention.

## Claims

1. A connection structure configured to electrically connect between a first connection object and a second connection object, wherein:
the connection structure comprises a first contact, a second contact, a relay contact, a first receiving portion and a second receiving portion;
the first contact is configured to be connected to the first connection object;
the second contact is configured to be connected to the second connection object;
the first contact is formed with a first female thread;
the second contact is formed with a second female thread whose handedness is opposite to a handedness of the first female thread;
the relay contact has a shaft portion extending in a predetermined direction;
the shaft portion is formed with a first male thread and a second male thread;
the first male thread corresponds to the first female thread;
the second male thread corresponds to the second female thread;
a handedness of the second male thread is opposite to a handedness of the first male thread;
when the first contact receives a force in a first orientation along the predetermined direction by a mating of the first male thread of the relay contact and the first female thread of the first contact upon screwing of the relay contact, the first receiving portion receives the first contact to regulate a movement of the first contact in the first orientation;
when the second contact receives a force in a second orientation along the predetermined direction by a mating of the second male thread of the relay contact and the second female thread of the second contact upon the screwing of the relay contact, the second receiving portion receives the second contact to regulate a movement of the second contact in the second orientation;
the second orientation is opposite to the first orientation; and
the regulation of the movement of the first contact by the first receiving portion and the regulation of the movement of the second contact by the second receiving portion cause that the first male thread of the relay contact is brought into contact with the first female thread of the first contact at multiple locations while the second male thread of the relay contact is brought into contact with the second female thread of the second contact at multiple locations.

2. The connection structure as recited in claim 1, wherein:
the first male thread is a left hand thread;
the second male thread is a right hand thread;
the first orientation is an orientation from the first contact toward the second contact; and
the second orientation is an orientation from the second contact toward the first contact.

3. The connection structure as recited in claim 2, wherein:
the connection structure further comprises an insulator which holds at least one of the first contact and the second contact; and
when the relay contact is screwed, a part of the insulator is positioned between the first contact and the second contact and functions as at least one of the first receiving portion and the second receiving portion.
